# EUROPEAN PATENT SPECIFICATION

(11) **EP 2 697 628 B1**
(45) Date of publication and mention of the grant of the patent: **25.03.2015**
(21) Application number: 12728821.5
(22) Date of filing: 16.04.2012
(51) Int. Cl.: G01N 21/77, G01N 27/12

(54) **CHEMICAL-PHYSICAL SENSING DEVICE FOR CHEMICAL-TOXICOLOGICAL DIAGNOSTICS IN REAL MATRICES**
CHEMISCH-PHYSIKALISCHE ERFASSUNGSVORRICHTUNG FÜR CHEMISCH-TOXIKOLOGISCHE DIAGNOSTIK IN ECHTMATRIZEN
DISPOSITIF DE DÉTECTION PHYSICO-CHIMIQUE POUR DIAGNOSTIQUE CHIMICO-TOXICOLOGIQUE DANS DES MATRICES RÉELLES

(30) Priority: 15.04.2011 IT RM20110193
(43) Date of publication of application: 19.02.2014
(73) Proprietor: Consiglio Nazionale Delle Ricerche, Roma (IT)
(72) Inventor: DRAGONE, Roberto, I-00185 Roma (IT); FRAZZOLI, Chiara, I-00161 Roma (IT); MONACELLI, Fabrizio, I-00185 Roma (IT)
(74) Representative: Iannone, Carlo Luigi
(86) International application number: PCT/IT2012/000110
(87) International publication number: WO 2012/140685

(56) References cited:
- EP-A2- 1 923 691
- WO-A2-2010/068653
- US-A- 4 003 707
- US-A- 5 116 759
- US-A- 5 733 506
- BEKYAROVA E ET AL: "Mechanism of ammonia detection by chemically functionalized single-walled carbon nanotubes: In situ electrical and optical study of gas analyte detection", JOURNAL OF THE AMERICAN CHEMICAL SOCIETY, AMERICAN CHEMICAL SOCIETY, WASHINGTON, DC; US, vol. 129, no. 35, 5 September 2007 (2007-09-05), pages 10700-10706, XP002584266, ISSN: 0002-7863, DOI: 10.1021/JA0703271 [retrieved on 2007-08-15]

## Description

The present invention relates to a detection sensing device, in the following also indicated as SNOOP, to detect contaminant chemical agents and/or composition chemical agents in real matrices, such as environmental liquids, foodstuffs or human or animal biological fluids.

More specifically, the invention relates to the structure of a device of the above kind that allows the identification of contaminant chemical agents, such as xenobiotics and agro-zootechnical residuals, and/or composition agents, as well as allows to define their amount by changes of optical and/or electrical properties of a material responsive to said chemical agents, and/or electrochemical properties of contaminant chemical agents and/or composition chemical agents of the real matrix to be examined.

At present, environmental politics of different industrialized countries aims to promote eco-friendly chemical processes (the so called "Green Chemistry"), in order to reduce anthropic pollution. However contamination of environment and of environment - alimentary production interface, due to the continuous and heavy admission of chemical agents, of old and new synthesis, remains one of the environmental and food emergency still existing.

In order to check degree and danger of contamination and/or composition changes of real matrices, many devices, and analytical methods thereof, have been developed for diagnostics and monitoring of said contaminant and/or composition chemical agents.

Most of traditional devices for identifying and quantifying contaminant and/or composition chemical agents are devices which are used in a laboratory. However, said traditional devices have some drawbacks.

A first drawback is that, for detection of said chemical and/or composition agents it is necessary to be present at the site where the presence of chemical agents is to be detected, to take a sample and to bring said sample to a laboratory for its analysis, thus wasting time, also in view of possible corrective actions.

Another drawback is that said devices do not permit an in situ monitoring of said agents or substances.

A further drawback is due to the fact that cumbersome and/or expensive analytical methods are used to analyse said sample.

Devices are also known for detection of chemical agents that can be used in situ. WO2010/068653 A2 discloses an apparatus for detecting a particular chemical with a flow cell having an optically transparent window and a semiconductive material disposed within the flow cell where the optically transparent window is located. The apparatus further includes at least one interdigitated electrode disposed within the flow cell in contact with the semiconductive material. A light source and photodetector are disposed outside on opposite sides of the flow cell. A processor is electrically connected to the electrode and the photodetector and receives first and second signals respectively output from the electrode and the photodetector with respect to a particular band. The processor determines whether or not a particular chemical is included in a sample.

However, also said devices have some drawbacks.

A drawback is that each device can detect a single contaminant chemical agent, or composition chemical agent, or, when more than one agent is detected by a plurality of devices, it is not providing an automatic processing of obtained data taken as a whole.

A further drawback is that they usually are bulky, and thus they cannot be easily transported or handled.

Still another drawback is that chemical-physical interferences are possible due to presence of many and different types of chemical agents in real matrices, this being even worse for contaminant agents due to their level of concentration, generally being at very low level of concentration.

Therefore, the need is high for providing devices that can detect in real time the presence of contaminant and/or composition chemical agents, taking into consideration possible interferences deriving from the complexity of the real matrix to be examined so that necessary precautions can be timely taken and/or introducing corrective actions for preserving human health.

Object of the present invention is that of overcoming said drawbacks, by providing a sensing device, also indicated as SNOOP, which allows to detect in an unambiguous way the presence of one or more contaminant and/or composition chemical agents in a real matrix, such as an environmental liquid, a food or a biological fluid, to be used in situ, said device operating in real time and with reduced costs, and at the same time preventing possible interferences by other contaminant and/or composition chemical agents, usually present in the same real matrix. These results have been obtained by providing a detecting device which detects the presence of said contaminant and/or composition chemical agents by the changes of optical properties, such as luminescence or reflectance, and/or of electrical properties of at least a material responsive to one or more of said contaminant and/or composition chemical agents, said material being provided within said device, by a comparison and/or a combination of comparisons between data received and processed by said device and stored data, the latter being obtained by laboratory simulated tests.

It is therefore specific object of the present invention a detecting device for detecting contaminant and/or chemical agents in a real matrix, particularly in an environmental liquid, a food or a biologic fluid, said device comprising:
- a housing
- at least one material responsive to at least one contaminant and/or composition chemical agent present in said real matrix,
- supporting means for supporting said at least one material,
- a detection unit for detecting said contaminant and/or chemical agent by the changes in optical and/or electrical properties of said material.

Said device further comprises, for each material responsive to at least one contaminant and/or composition chemical agent:
- at least one light source or emitter for emitting one or more luminous radiation on said responsive material, said light source being connected to said detection unit,
- an optical receiver for receiving the light radiation reflected from said material and/or emitted by it, said optical receiver being connected to said detection unit and transmitting to it one or more signals containing information on the optical properties of said material,
- a pair of electrodes, each of which has one end in contact with said material, and the other end electrically connected to said detection unit, said detection unit applying, through said electrodes, a potential difference on said responsive material so that the latter generates one or more response signals containing information on its electrical properties.

Particularly, said luminous radiations are emitted in sequence by said light source, and each luminous radiation has a respective predetermined wavelength; and said detection unit comprising a database, within which are stored:
- a plurality of predetermined responsive materials;
- a plurality of optical spectra associated to each one of said predetermined responsive materials, obtained in absence and in presence of a predetermined potential difference applied to each one of them, each optical spectrum being associated to the interaction with one or more predetermined contaminant and/or composition chemical agents,
- a plurality of changes of electrical properties associated with each one of said predetermined responsive materials, each change of the electrical property being associated with interaction with one or more predetermined contaminant and/or composition chemical agents.

The detection unit is configured to receive signals containing information about the optical properties of said responsive material, and/or signals containing information about the electrical properties of the same responsive material, to obtain the optical spectra of each responsive material, in the presence or the absence of a potential difference applied by said detection unit, starting from luminous radiations received from said optical receiver, and to carry out a first comparison between each optical spectrum of said contaminant and/or composition chemical agent and the respective stored optical spectrum, and/or to carry out a second comparison between the changes of electrical properties of each responsive material and the changes of electrical properties of each responsive material stored within said database, so that from one of said comparisons or from a combination of said comparisons one or more contaminant and/or composition chemical agents in said real matrix is/are identified.

According to the invention, said device can comprise a further pair of electrodes, spaced each other, each one of them having a first end fixed to said housing, and electrically connected with said detection unit, and a plurality of predetermined tension-current curves can be stored within the database of the detection unit, each one associated with at least a predetermined contaminant and/or composition chemical agent. Said detection unit can be configured to apply one or more predetermined potential differences, constant and/or variable, to said further pair of electrodes, to measure a respective received electric current signal, and to carry out a third comparison between the tension-current curve obtained and the predetermined tension-current curves, so that, electrochemical features of said contaminant and/or composition chemical agents are identified from said third comparison, and so that possible identification ambiguities are eliminated from the combination of said first and second comparison, and said contaminant and/or composition chemical agents are quantified.

It is preferred that device comprises a plurality of light sources and that detection unit can activate, in sequence, a light source at a time.

Particularly, the radiation emitted by a light source can have a greater wavelength up to a maximum of 50nm with respect to the wavelength of light radiation emitted by a light source activated before by detection unit.

Still according to the invention, it is possible to provide that at least a light source comprises supporting means and a plurality of light emission diodes or LEDs arranged on said support means, and that said detection unit activates, in sequence, a light source at a time.

Particularly, said supporting means can comprise a rotating base, and said LEDs can be arranged close to the edge of said rotating base.

According to the invention, the detection device can comprise a plurality of materials responsive to at least one contaminant and/or composition chemical agent that can be arranged on one or more supporting means. In this specific case, for each responsive material it is provided a respective pair comprised of a light source and an optical receiver, which is optically decoupled from the other pairs by opaque and non-conductive separation means, and it is provided a respective pair of electrodes which is electrically decoupled from the other electrode pairs by an electrical insulation.

Advantageously, said detection unit can comprise a memory for storing optical and/or electrical properties of responsive materials and/or electrochemical properties of matrix to be examined in absence and/or in presence of at least one contaminant and/or composition chemical agent.

Preferably, said supporting means can be removably fixed to the inner surface of the device by engaging/disengaging means, and detection device can comprise, for each light source and for each optical receiver, respective adjusting means for adjusting the position and orientation of said source light and said optical receiver with respect to the material; said adjusting means being controlled by said detection unit.

Furthermore it is preferred that said device comprises displaying means for displaying the results of the processing of said detection unit.

According to the invention, said detection unit can be connected to a computer for remote monitoring of said real matrix, and/or the for setting one or more parameters of said detection unit and/or for storing of information concerning optical and/or electrical properties of the material in absence and presence of at least one contaminant chemical agent.

Particularly, each material can be a synthetic organic material, such as an organic material belonging to the class of tetrapyrrolic macrocycles or a material for OLED, or a material for LED, or a biological system, and said supporting means are made up of Teflon® or glass or quartz or any other inert material.

Still according to the invention, the detection device can comprise a filter element for separating suspended solid particles and/or substances dissolved in said real matrix, said filter element being fixed on said device so as to be arranged between said real matrix, outside said detection device and with which it is in contact, and said supporting means. Particularly, said filter element can be comprised of cellulose acetate or Teflon®, or it is made up of polyether sulfone, or it is made up of any other material with selective permeability. Said filter element can be a membrane.

Furthermore, according to the invention, said device can be provided with an opening or hole and a removable closing element for said opening, so as to allow a passage of air on the outside of the device in order to facilitate, inside of said device, the crossing of the filter element by a fluid containing the contaminant and/or composition chemical agent.

Advantageously, the device can further comprise acoustic and/or visual means for emitting acoustic and/or visual alarms when the value of the concentration of a composition and/or contaminant chemical agent exceeds a predetermined threshold.

The present invention will be now described, for illustrative, but not limitative, purposes, according to its embodiments, making particular reference to the enclosed drawings, wherein:
figure 1 schematically shows a section view of a first embodiment of the device for detecting contaminant chemical agents in a real matrix according to the invention;
figure 2 schematically shows a section view of a second embodiment of the device for detecting contaminant chemical agents in a real matrix according to the invention.

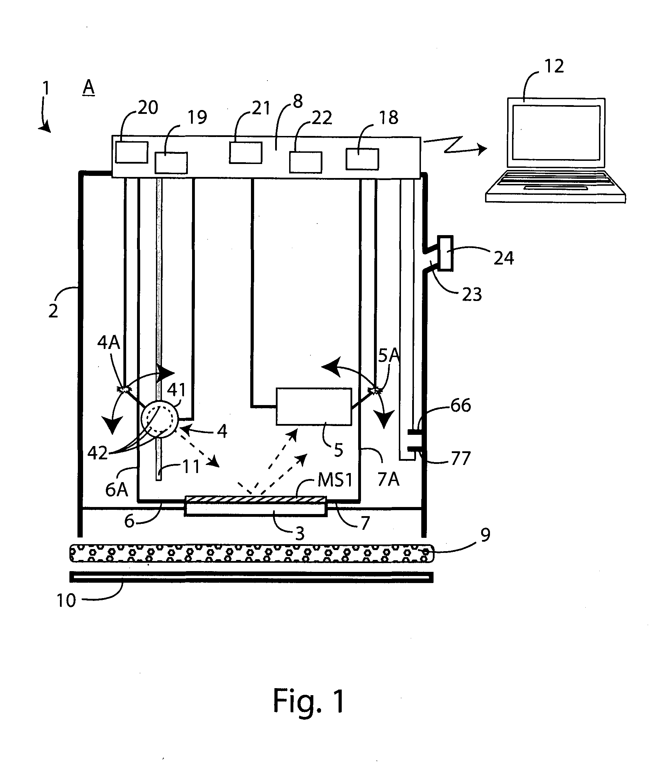

Making particular reference to figure 1, in the first embodiment described, it is provided a device 1 for detecting contaminating chemical agents present in environment, foodstuffs or in biological fluids.

In the example described, the device 1 is used for detecting at least one contaminant chemical agent in a real matrix which is a fluid A. Advantageously, the same device can be used for detecting one or more composition chemical agents, in combination or in alternative with said at least one contaminating chemical agent, in the same real matrix, or in another real matrix, without departing from the invention.

Said device 1 comprises a housing 2, within which the following elements are provided:
- a material MS1 responsive to at least one contaminant chemical agent present in said fluid A, provided on supporting means 3,
- a detection unit 8 for detecting said contaminant chemical agent through changes in optical and/or electrical properties of said material MS1,
- a light source or emitter 4 for emitting one or more luminous radiation on said responsive material MS1, connected to said detection unit 8,
- an optical receiver 5 for receiving the light radiation reflected from said material MS1 and/or emitted by the material MS1 itself, for effect of the luminous radiation incident on the same (e.g. by fluorescence), said optical receiver being connected to said detection unit 8 and transmitting to it one or more signals containing information on the optical properties of said material MS1,
- two electrodes 6, 7, each of which is provided with an electrically insulated outer surface, and has one end in contact with said material MS1, and the other end electrically connected to said detection unit 8 by a respective electric cable 6A, 7A,
- two further electrodes 66, 77, spaced from each other, each one of which has a first end fixed to said housing 2, and a free second end faced within said device, and is electrically connected with said detection unit 8.

Particularly, the light source 4 is a discontinue light source, since each emitted luminous radiation has a predetermined wavelength.

According to the invention, said light source 4 comprises a rotating base having a circular section and a plurality of light emission diodes or LEDs 42 close to the edge of said rotating base.

Said LEDs are activated in sequence by the detection unit 8 so that the responsive material MS1 is hit by a plurality of luminous radiations in succession, each one having a respective predetermined wavelength.

It is preferred that the radiation emitted by a LED has a wavelength which is, at most, 50nm distant from the wavelength of luminous radiation emitted by a LED previously activated.

The device is further provided with switching on/off means 18 for switching on/off said device 1 suitable to activate said detection unit 8, said light source 4 and said optical receiver 5, as well as supply means 21 to supply said device.

The detection unit 8 applies a predetermined potential difference to said electrodes 6, 7, by electrical cables 6A, 7A, so that material MS1 responsive to at least a contaminant chemical agent generates one or more response signals containing information about its electrical properties and that detection unit 8 receives and processes said response signals. Processing of said signals allows to detect the contaminant chemical agent by changes of electrical properties of the material MS1.

On one side, to detect changes of optical properties of the responsive material MS1, the detection unit 8 receives and processes signals sent to itself by the optical receiver 5. Processing of said signals allows to detect the contaminant chemical agent by the changes of optical properties of the material MS1. According to the invention, said detection unit 8 further comprises a database 22 within which the following data are stored: a plurality of predetermined responsive materials, a plurality of optical spectra, each of which is associated with a preselected responsive material, obtained in absence and in presence of a predetermined potential difference applied to each one of them, a plurality of changes of electrical properties associated with each one of said predetermined responsive materials, wherein each change of electrical property is associated with the presence of one or more predetermined contaminant chemical agents, as well as a plurality of predetermined tension-current curves, each one associated with at least one contaminant chemical agent.

In the described embodiment, said detection unit is configured to receive signals containing information about optical properties of said responsive material MS1, and signals containing information about electrical properties of the same responsive material, to obtain optical spectra of each responsive material MS1, in presence or absence of a potential difference applied by said detection unit 8, starting from luminous radiations received from said optical receiver 5.

Furthermore, said detection unit 8 is configured to process received signals, to carry out a first comparison between each optical spectrum of said contaminant chemical agent to be detected and the respective optical spectrum stored within said database 22, and/or to carry out a second comparison between changes of electrical properties of each responsive material MS1 and changes of electrical properties of each responsive material stored within said database 22, so that from the combination of said comparisons one or more contaminant agents in the fluid A is/are identified as well as, after having applied one or more predetermined potential differences on said two further electrodes 66, 77, to measure a respective received electric current signal, and to carry out a third comparison between tension-current curve obtained and the predetermined tension-current curves stored in the database 22, so that, electrochemical features of said contaminant chemical agents are identified.

In other words, according to the invention, the detection unit 8 is suitable to detect the presence of a contaminant chemical agent on the basis of optical and electrical properties of material MS1 arranged on the supporting means 3 by processing signals sent respectively by said optical receiver 5 and by the material MS1 through electrodes, when a potential difference is applied to said electrodes, and to identify electrochemical features of said contaminant chemical agent by said tension-current curves.

By comparison between optical and electrical properties of material MS1 measured in the absence of a contaminant chemical agent and those in the presence of a contaminant chemical agent, the detection unit 8 determines the extent of changes of said optical and/or electrical properties of said responsive material, as well as electrochemical properties of said contaminant chemical agent.

Although in described example the detection unit combines information obtained by three comparisons, it is advantageously possible providing that detection unit carries out the first comparison as an alternative to, or in combination with, the second comparison, and that it carries out the third comparison in combination with said first comparison and/or said second comparison, without departing from the scope of the present invention. In fact, depending on the contaminant chemical agent to be detected, it can be sufficient one of the first two comparisons, or their combination.

Furthermore, the detection unit 8 can be programmed to identify, by said changes, the contaminant chemical agent, and possibly to determine its amount. In fact, the plurality of responsive materials that can be used permits a plurality of combinations of optical signals and/or electrical signals and/or electrochemical signals, by which it is possible to unambiguously identify one or more chemical contaminant agents, thus eliminating ambiguity deriving from possible interferences.

A memory 19 for storing optical properties and/or electrical properties of material MS1 in the absence of contaminant chemical agent is provided in said detection unit 8.

In the described embodiment, supporting means 3 on which material MS1 responsive to at least a contaminant chemical agent is arranged, comprise a support with a rectangular section which is fixed to the inner structure of the housing 2, so as to be horizontal within said housing 2, i.e. perpendicular to the inner surface of said housing.

Said support can be removably fixed by quick coupling/release means (not shown) to the inner surface of the housing 2.

Advantageously, removable coupling of supporting means to the housing 2 permits to a user to remove said support means, and the material MS1 supported on the supporting means itself, replacing the supporting means with another one supporting a responsive material that can be the same as the one removed, e.g. in case of wearing and/or damaging of the same material, or different, so that one or more further chemical agents present in fluid A can be detected by the same device.

The device 1 comprises respective adjustment means 4A and 5A for adjusting the position and orientation of said light source 4 and of said optical receiver 5 with respect to the material MS1; said adjusting means being controlled by said detection unit 8.

Position and orientation are two parameters that can be predetermined before or predetermined by an operator by said detection unit 8.

Advantageously, a micro adjustment permits optimizing the angle between the light source and the receiver, i.e. the angle of the received signal.

The device 1 also comprises displaying means 20 for displaying the results of the processing of said detection unit 8.

Advantageously, according to the invention, detection unit 8 can be programmed to record and compare the optical spectrum, e.g. of luminescence or of reflectance of the responsive material MS1 in the absence or in the presence of a contaminant chemical agent.

The detection unit 8 can be connected to a computer 12, e.g. by an electric cable or a wireless connection, for remotely monitoring the fluid A, setting one or more parameters of said detection unit 8, and storing of information relating to the optical and/or electric properties of responsive material MS1 in the absence or in the presence of one or more contaminant chemical agents.

In the described embodiment, the device 1 further comprises a sensor 11 to detect the temperature of the fluid A, connected with said detection unit 8, as well as a filter element 9 for separating suspended solid particles and/or substances dissolved within said fluid A by chemical agents in issue.

Said filter element is a membrane and it is fixed to the lower end of housing 2 of said device 1 by an O-ring 10, so that it is placed between fluid A, outside said housing and with which it is in contact, and support means 3 of material MS1 responsive to at least one contaminant chemical agent.

Outer surface of housing 2 is opaque so that luminous radiation arriving from outside does not interfere when detecting chemical agents in issue.

The responsive material MS1 can be either a synthetic organic material, such as an organic material belonging to the class of tetrapyrrolic macrocycles or a material for OLED, or a material for LED, or a biological system.

Said supporting means 3 can be made up of Teflon® or glass or quartz or any other inert material.

The light source 4 can be a light emitting diode or LED, or it can be an light emitting organic diode or OLED, and the receiver 5 can be a photodiode.

The supply means 21 of the device can comprise a battery or a accumulator rechargeable by electric power or solar power, or a manual dynamo.

The filter element 9 can be comprised of cellulose acetate or Teflon®, or can be made up of polyether sulfone, or it is made up of any other material provided with a selective permeability.

According to the invention, it is possible providing an opening or hole 23 and a removable closing element 24 for said opening, so as to allow a passage of air on the outside of the device, once that said closing element is removed, in order to facilitate, inside of said device, the crossing of the filter element 9 by the fluid A containing the contaminant chemical agent.

Advantageously, mechanical or manual means can be applied on said opening to create a negative pressure thus easing the contact between said fluid and said material, mainly in the presence of a filter element 9 which is less permeable to the fluid.

In a different arrangement (not shown), device 1 can be further provided with acoustic and/or visual signalling means to emit acoustic and/or visual alarms when value of concentration of a chemical agent exceed a predetermined threshold, i.e. a concentration value which is taken as the highest tolerable limit.

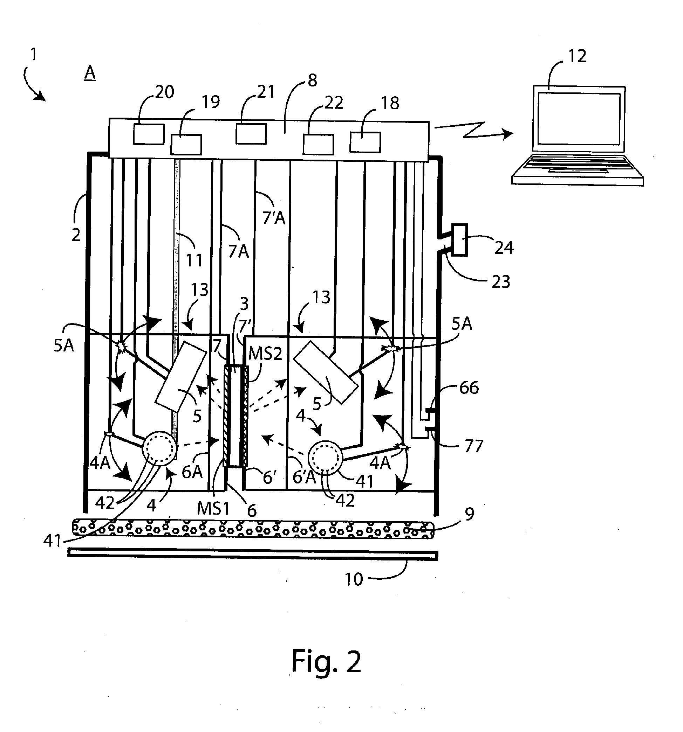

In the second embodiment, shown in figure 2, supporting means 3 support, in addition to the material MS1, a second material MS2, which is responsive to a second contaminant chemical agent.

When two responsive materials are present, a second light source 4 to emit a luminous radiation on said second responsive material MS2 and a second optical receiver 5 for receiving luminous radiation reflected and/or emitted by said second responsive material MS2 are provided within the housing 2.

Two electrodes 6', 7', each one having an end contacting said responsive material MS2 and the other end electrically connected with said detection unit 8 by a respective electric cable 6'A, 7'A. Said pair of electrodes is electrically decoupled with respect to pair of electrodes 6, 7 for first responsive material MS1 by an electric insulation (not shown).

Particularly, responsive materials MS1, MS2 are provided on opposed surfaces of the support 3, which has a rectangular section and is fixed on the inner structure of the housing 2, so as to be vertically placed within said housing 2, i.e. parallel with respect to inner surface of the housing 2.

In this second embodiment, each light source emits a plurality of luminous radiations in succession on a respective responsive material, each one at a predetermined wavelength, and each optical receiver 5 receives the luminous radiation reflected and/or emitted by a respective responsive material.

In other words, the responsive material MS1 arranged on one face of the support is optically and electrically decoupled with respect to responsive material provided on the opposite face of the same support by suitable opaque and not conductive separation means. In the described example, said separation means comprise, for each responsive material, a respective separation septum 13, fixed to the inner surface of housing 2.

Although the two embodiments described in the above the supporting means 3 have a rectangular cross-section and support respectively a responsive material and two responsive materials, said supporting means 3 can have any section and can support an even higher number of responsive materials, said material being the same or different each other.

For example, the supporting means 3 can have a triangular section, a squared section or they can have any polygonal section so as to support a suitable responsive material on at least one face of said polygon, provided that the responsive material arranged on a face is optically decoupled with respect to responsive materials arranged on the other faces, and pair of electrodes of every sensible material is electrically decoupled with respect to pairs of electrodes provided for other responsive materials.

In case in which the supporting means 3 support three or more responsive materials, the device 1 comprises a plurality of pairs comprised of a light source 4 and an optical receiver 5, in number corresponding to the number of responsive materials arranged on said supporting means 3, so that radiation emitted by each one of said light sources 4 is only directed on a respective responsive material and that luminous radiation reflected and/or emitted by each one of said responsive materials is received only by one corresponding optical receiver 5.

Furthermore, the section of said supporting means 3 can be a hollow section so that a responsive material can be applied on at least the inner face, i.e. faced toward the cavity and/or on at least an outer face, i.e. opposite to said inner face.

A first advantage, already mentioned in the above, is due to the fact that device according to the invention is suitable to detect in situ and in real time the presence of one or more contaminant chemical agents and/or of composition chemical agents, to identify said contaminant and/or composition chemical agents, and possibly determining their concentration.

A second advantage is possibility of realizing said device with limited dimensions so that it can be easily transported by an operator, even with such dimensions to be put within a pocket.

Another advantage is due to possibility of obtaining a statistic about contaminant chemical agents and/or composition chemical agents in environment, in foodstuffs, or in biological fluids, when the same responsive material is fixed on the support, or information about different chemical agents, when a plurality of responsive materials is fixed on said support.

A further advantage is that alarm signals can be sent when the detected concentration of one or more contaminant chemical agents exceed a predetermined threshold value.

The present invention has been described for illustrative, but not limitative purposes according to its preferred embodiments, but it is to be understood that variations and/or modifications can be introduced by those skilled in the art without departing from the relevant scope, as defined in the enclosed claims.

## Claims

1. Detecting device (1) for detecting contaminant and/or composition chemical agents in a real matrix, particularly in an environmental liquid, in a food or in a biologic fluid, said device comprising:
- a housing (2)
- at least one material (MS1, MS2) responsive to at least one contaminant and/or composition chemical agent present in said real matrix,
- supporting means (3) for supporting said at least one material (MS1, MS2),
- a detection unit (8) for detecting said contaminant and/or composition chemical agent through changes in optical and/or electrical properties of said material (MS1, MS2),
and further comprising for each material (MS1, MS2) responsive to at least one contaminant and/or composition chemical agent:
- at least a light source or emitter (4) capable of emitting one or more luminous radiation on said responsive material (MS1, MS2), said light source being connected to said detection unit (8),
- an optical receiver (5) for receiving the light radiation reflected from said material (MS1, MS2) and/or emitted by it, said optical receiver being connected to said detection unit (8) and transmitting to it one or more signals containing information on the optical properties of said material (MS1, MS2), and
- a pair of electrodes (6, 7; 6', 7'), each of which has one end in contact with said material (MS1, MS2), and the other end electrically connected to said detection unit (8), said detection unit (8) being capable of applying,
through said electrodes, a potential difference on said responsive material (MS1, MS2) so that the latter generates one or more response signals containing information on its electrical properties,
said device further comprising that
said light source (4) is capable of emitting said luminous radiations in sequence and each luminous radiation has a respective predetermined wavelength;
and in that
said detection unit (8) comprises a database (22), within which are stored:
- a plurality of predetermined responsive materials;
- a plurality of optical spectra associated with each one of said predetermined responsive materials, obtained in the absence and in the presence of a predetermined potential difference applied to each one of them, each optical spectrum being associated with the interaction with one or more predetermined contaminant and/or composition chemical agents,
- a plurality of changes of electrical properties associated with each one of said predetermined responsive materials, each change of electrical property being associated with the interaction with one or more predetermined contaminant and/or composition chemical agents,
wherein said detection unit (8) is configured to receive signals containing information about optical properties of said responsive material (MS1, MS2), and/or signals containing information about electrical properties of the same responsive material, to obtain optical spectra of each responsive material (MS1, MS2), in presence or absence of a potential difference applied by said detection unit (8), starting from luminous radiations received from said optical receiver, and to carry out a first comparison between each optical spectrum of said contaminant and/or composition chemical agent to be detected and the respective optical spectrum stored within said database (22), and/or to carry out a second comparison between changes of electrical properties of each responsive material (MS1, MS2) and changes of electrical properties of each responsive material (MS1, MS2) stored within said database (22), so that from one of said comparisons or from combination of said comparisons one or more contaminant and/or composition chemical agents in said real matrix is/are identified.

2. Device (1) according to the previous claim, **characterized in that** it
further comprises a further pair of electrodes (66, 77), spaced from each other, each of which has a first end fixed to said housing (2), and a second end which is faced within said device and electrically connected with said detection unit,
**in that**
a plurality of predetermined tension-current curves are stored within database (22) of said detection unit (8), each one associated with at least a predetermined contaminant and/or composition chemical agent, and
**in that**
said detection unit (8) is configured to apply one or more predetermined potential difference, constant and/or variable, on said further pair of electrodes (66, 77), to measure a respective received electric current signal, and to carry out a third comparison between tension-current curve obtained and predetermined tension-current curves, so that, by said third comparison, electrochemical features of said contaminant and/or composition chemical agents are identified and so that, from the combination with said first and second comparison, possible identification ambiguities are eliminated and said contaminant and/or composition chemical agents are quantified.

3. Device (1) according to one of the preceding claims, **characterized in that** it comprises a plurality of light sources (4) and **in that** said detection unit (8) activates, in succession, a light source (4) at a time.

4. Device (1) according to one of the preceding claims, **characterized in that** radiation emitted by a light source (4) has a greater wavelength up to a maximum of 50nm with respect to the wavelength of light radiation emitted from a light source (4) activated before by detection unit (8).

5. Device (1) according to one of the preceding claims, **characterized in that** at least one light source (4) comprises supporting means (41) and a plurality of light emission diodes or LEDs (42) arranged on said support means (41), and **in that** said detection unit (8) activates, in succession, a light source at a time.

6. Device (1) according to the preceding claim, **characterized in that** said supporting means (41) comprises a rotating base, and **in that** said LEDs (42) are arranged close to the edge of said rotating base.

7. Device (1) according to one of the preceding claims, **characterized in that**, when it comprises a plurality of materials (MS1, MS2) responsive to at least one contaminant and/or composition chemical agents, said materials being arranged on one or more supporting means (3), for each responsive material (MS1, MS2) the respective pair comprised of a light source (4) and an optical receiver (5), is optically decoupled from the other pairs by opaque and non-conductive separation means (13), and the pair of electrodes of a respective responsive material is electrically decoupled from the other pairs of electrodes by an electrical insulation.

8. Device (1) according to one of the preceding claims, **characterized in that** said detection unit (8) comprises a memory (19) for storing optical and/or electrical properties of responsive materials (MS1, MS2) and/or electrochemical properties of matrix to be examined in absence and/or in presence of at least one contaminant and/or composition chemical agent.

9. Device (1) according to one of the preceding claims, **characterized in that** said supporting means (3) are removably fixed to the inner surface of the device by engaging/disengaging means.

10. Device (1) according to one of the preceding claims, **characterized in that** it comprises, for each light source (4) and for each optical receiver (5), respective adjusting means (4A, 5A) for adjusting the position and orientation of said light source (4) and said optical receiver (5) with respect to the material; said adjusting means (4A, 5A) being controlled by said detection unit (8).

11. Device (1) according to one of the preceding claims, **characterized in that** it comprises displaying means (20) for displaying the results of the processing of said detection unit (8).

12. Device (1) according to one of the preceding claims, **characterized in that** said detection unit (8) is connected to a computer (12) for remote monitoring of said real matrix, and/or setting one or more parameters of said detection unit (8) and/or for storing of information on optical and/or electrical properties of the material (MS1, MS2) in absence and presence of at least one contaminant chemical agent.

13. Device (1) according to one of the preceding claims, **characterized in that** each material (MS1, MS2) is a synthetic organic material, such as an organic material belonging to the class of tetrapyrrolic macrocycles or a material for OLED, or a material for LED, or a biological system.

14. Device (1) according to one of the preceding claims, **characterized in that** said supporting means (3) are made up of Teflon® or glass or quartz or any other inert material.

15. Device (1) according to one of the preceding claims, **characterized in that** it comprises a filter element (9) for separating suspended solid particles and/or substances dissolved in said real matrix; said filter element being fixed on said device (1) so as to be arranged between said real matrix, outside said detection device and with which it is in contact, and said supporting means.

16. Device (1) according to preceding claim, **characterized in that** said filter element (9) is comprised of cellulose acetate or Teflon®, or it is made up of polyether sulfone, or it is made up of any other material with selective permeability.

17. Device (1) according to one of the preceding claims, **characterized in that** said filter element (9) is a membrane.

18. Device (1) according to one of the preceding claims, **characterized in that** it is provided with an opening or hole (23) and a removable closing element (24) for said opening, so as to allow a passage of air on the outside of the device in order to facilitate, inside of said device, the crossing of the filter element (9) by a fluid (A) containing the contaminant and/or composition chemical agent.

19. Device (1) according to one of the preceding claims, **characterized in that** it further comprises acoustic and/or visual signalling means for emitting acoustic and/or visual alarms when the value of the concentration of a contaminant chemical agent exceeds a predetermined threshold.

## Patentansprüche

1. Detektierungsvorrichtung (1) zum Detektieren von Verunreinigungs- und/oder Zusammensetzungschemikalien in einer Echtmatrix, insbesondere in einer Umweltflüssigkeit, in einem Nahrungsmittel oder in einem biologischen Fluid, wobei die Vorrichtung umfasst:
- ein Gehäuse (2)
- mindestens ein Material (MS1, MS2), das auf mindestens eine Verunreinigungs- und/oder Zusammensetzungschemikalie anspricht, die in der Echtmatrix vorhanden ist,
- Trägermittel (3) zum Trägern des mindestens einen Materials (MS1, MS2),
- eine Detektierungseinheit (8) zum Detektieren der Verunreinigungs- und/oder Zusammensetzungschemikalie mithilfe von Veränderungen der optischen und/oder elektrischen Eigenschaften des Materials (MS1, MS2),
und ferner für jedes Material (MS1, MS2), das auf mindestens eine Verunreinigungs- und/oder Zusammensetzungschemikalie anspricht, umfasst
- mindestens eine Lichtquelle oder einen Emitter (4), die bzw. der eine oder mehrere leuchtende Strahlung(en) auf das ansprechbare Material (MS1, MS2) emittieren kann, wobei die Lichtquelle mit der Detektierungseinheit (8) verbunden ist,
- einen optischen Empfänger (5) zum Empfangen der Lichtstrahlung, die von dem Material (MS1, MS2) reflektiert und/oder emittiert wird, wobei der optische Empfänger mit der Detektierungseinheit (8) verbunden ist und ein oder mehrere Signale, die Informationen zu den optischen Eigenschaften des Materials (MS1, MS2) enthalten, an diese überträgt, und
- ein Paar Elektroden (6, 7; 6', 7'), von denen jede an einem Ende in Kontakt mit dem Material (MS1, MS2) ist und am anderen Ende elektrisch mit der Detektierungseinheit (8) verbunden ist, wobei die Detektierungseinheit (8) in der Lage ist, mittels der Elektroden eine Potentialdifferenz an das ansprechbare Material (MS1, MS2) anzulegen, so dass das letztere ein oder mehrere Ansprechsignale generiert, die Informationen zu seinen elektrischen Eigenschaften enthalten, wobei die Vorrichtung ferner umfasst, dass die Lichtquelle (4) in der Lage ist, die leuchtenden Strahlungen in Sequenz zu emittieren und jede leuchtende Strahlung eine jeweilige vorbestimmte Wellenlänge aufweist;
und dass die Detektierungseinheit (8) eine Datenbank (22) umfasst, in der gespeichert sind:
- eine Vielzahl von vorbestimmten ansprechenden Materialien;
- eine Vielzahl von optischen Spektren, die mit jedem der vorbestimmten ansprechenden Materialien assoziiert sind und in Abwesenheit und in Anwesenheit einer vorbestimmten Potentialdifferenz erhalten wurden, die an jedes davon angelegt wurde, wobei jedes optische Spektrum mit der Wechselwirkung mit einer oder mehreren vorbestimmten Verunreinigungs- und/oder Zusammensetzungschemikalien assoziiert ist,
- eine Vielzahl von Veränderungen der elektrischen Eigenschaften, die mit jedem der vorbestimmten ansprechenden Materialien assoziiert sind, wobei jede Veränderung der elektrischen Eigenschaft mit der Wechselwirkung mit einem oder mehreren vorbestimmten Verunreinigungs- und/oder Zusammensetzungschemikalien assoziiert ist,
wobei die Detektierungseinheit (8) so konfiguriert ist, dass sie Signale, die Informationen zu optischen Eigenschaften des ansprechenden Materials (MS1, MS2) enthalten, und/oder Signale, die Informationen zu elektrischen Eigenschaften desselben ansprechenden Materials enthalten, empfängt, um optische Spektren von jedem ansprechenden Material (MS1, MS2) in Anwesenheit oder Abwesenheit einer Potentialdifferenz zu erhalten, die durch die Detektierungseinheit (8) angelegt wird, ausgehend von leuchtenden Strahlungen, die von dem optischen Empfänger empfangen werden, und einen ersten Vergleich zwischen jedem optischen Spektrum der zu detektierenden Verunreinigungs- und/oder Zusammensetzungschemikalie und dem jeweiligen in der Datenbank (22) gespeicherten optischen Spektrum durchführt, und/oder einen zweiten Vergleich zwischen Veränderungen der elektrischen Eigenschaften jedes ansprechenden Materials (MS1, MS2) und Veränderungen der elektrischen Eigenschaften jedes innerhalb der Datenbank (22) gespeicherten ansprechenden Materials (MS1, MS2) durchführt, so dass aus einem der Vergleiche oder der Kombination der Vergleiche ein oder mehrere Verunreinigungs- und/oder Zusammensetzungschemikalien in der Echtmatrix identifiziert wird bzw. werden.

2. Vorrichtung (1) nach dem vorhergehenden Anspruch, **dadurch gekennzeichnet, dass** sie ferner ein weiteres Paar Elektroden (66, 77) umfasst, die voneinander beabstandet sind, wobei jede hiervon ein erstes Ende, das an dem Gehäuse (2) angebracht ist, und ein zweites gegenüber stehendes Ende innerhalb der Vorrichtung aufweist, das elektrisch mit der Detektierungseinheit verbunden ist, derart dass
eine Vielzahl von vorbestimmten Spannungs-Strom-Kurven innerhalb der Datenbank (22) der Detektierungseinheit (8) gespeichert sind, die jeweils mit mindestens einer vorbestimmten Verunreinigungs- und/oder Zusammensetzungschemikalie assoziiert sind, und derart dass
die Detektierungseinheit (8) konfiguriert ist, um eine oder mehrere vorbestimmte Potentialdifferenzen, konstant und/oder variabel, an das weitere Paar von Elektroden (66, 77) anzulegen, um ein jeweiliges empfangenes elektrisches Stromsignal zu messen und einen dritten Vergleich zwischen erhaltenen Spannungs-Strom-Kurven und vorbestimmten Spannungs-Strom-Kurven durchzuführen, so dass durch den dritten Vergleich elektrochemische Merkmale der Verunreinigungs- und/oder Zusammensetzungschemikalie identifiziert werden und dass aus der Kombination mit dem ersten und zweiten Vergleich mögliche Zweifel an der Identifizierung ausgeräumt werden und die Verunreinigungs- und/oder Zusammensetzungschemikalien quantifiziert werden.

3. Vorrichtung (1) nach einem der vorhergehenden Ansprüche, **dadurch gekennzeichnet, dass** sie eine Vielzahl von Lichtquellen (4) umfasst und dass die Detektierungseinheit (8) aufeinander folgend jeweils eine Lichtquelle (4) aktiviert.

4. Vorrichtung (1) nach einem der vorhergehenden Ansprüche, **dadurch gekennzeichnet, dass** von einer Lichtquelle (4) emittierte Strahlung eine größere Wellenlänge bis zu einem Maximum von 50 nm in Bezug auf die Wellenlänge der Lichtstrahlung aufweist, die von einer Lichtquelle (4) emittiert wird, die zuvor durch Detektierungseinheit (8) aktiviert wurde.

5. Vorrichtung (1) nach einem der vorhergehenden Ansprüche, **dadurch gekennzeichnet, dass** mindestens eine Lichtquelle (4) Trägermittel (41) und eine Vielzahl von Licht emittierenden Dioden oder LEDs (42) umfasst, die auf den Trägermitteln (41) angeordnet sind, und dass die Detektierungseinheit (8) aufeinander folgend jeweils eine Lichtquelle aktiviert.

6. Vorrichtung (1) nach dem vorhergehenden Anspruch, **dadurch gekennzeichnet, dass** die Trägermittel (41) eine rotierende Basis umfassen, und dass die LEDs (42) nahe am Rand der rotierenden Basis angeordnet sind.

7. Vorrichtung (1) nach einem der vorhergehenden Ansprüche, **dadurch gekennzeichnet, dass**, wenn sie eine Vielzahl von Materialien (MS1, MS2) umfasst, die auf mindestens eine Verunreinigungs- und/oder Zusammensetzungschemikalie ansprechen, die Materialien auf einem oder mehreren Trägermitteln (3) angeordnet sind, wobei für jedes ansprechende Material (MS1, MS2) das jeweilige Paar, welches aus einer Lichtquelle (4) und einem optischen Empfänger (5) zusammengestellt ist, optisch von den anderen Paaren durch undurchsichtige und nicht-leitende Trennmittel (13) entkoppelt ist und das Elektrodenpaar aus einem jeweiligen ansprechbaren Material durch eine elektrische Isolierung elektrisch von den anderen Elektrodenpaaren entkoppelt ist.

8. Vorrichtung (1) nach einem der vorhergehenden Ansprüche, **dadurch gekennzeichnet, dass** die Detektierungseinheit (8) einen Speicher (19) zum Speichern von optischen und/oder elektrischen Eigenschaften von ansprechenden Materialien (MS1, MS2) und/oder elektrochemischen Eigenschaften der Matrix umfasst, die in Abwesenheit und/oder in Anwesenheit von mindestens einer Verunreinigungs- und/oder Zusammensetzungschemikalie zu untersuchen sind.

9. Vorrichtung (1) nach einem der vorhergehenden Ansprüche, **dadurch gekennzeichnet, dass** die Trägermittel (3) durch Einkopplungs-/Auskopplungsmittel entfernbar an der Innenseite der Vorrichtung angebracht sind.

10. Vorrichtung (1) nach einem der vorhergehenden Ansprüche, **dadurch gekennzeichnet, dass** sie für jede Lichtquelle (4) und für jeden optischen Empfänger (5) jeweils Justiermittel (4A, 5A) umfasst, um die Position und Orientierung der Lichtquelle (4) und des optischen Empfängers (5) in Bezug auf das Material zu justieren; wobei die Justiermittel (4A, 5A) durch die Detektierungseinheit (8) gesteuert werden.

11. Vorrichtung (1) nach einem der vorhergehenden Ansprüche, **dadurch gekennzeichnet, dass** sie Anzeigemittel (20) zum Anzeigen der Ergebnisse der Verarbeitung der Detektierungseinheit (8) umfasst.

12. Vorrichtung (1) nach einem der vorhergehenden Ansprüche, **dadurch gekennzeichnet, dass** die Detektierungseinheit (8) mit einem Computer (12) verbunden ist, um die Echtmatrix aus der Ferne zu überwachen und/oder um einen oder mehrere Parametern der Detektierungseinheit (8) festzulegen und/oder um Informationen zu optischen und/oder elektrischen Eigenschaften des Materials (M1, M2) in Abwesenheit und Anwesenheit von mindestens einer Verunreinigungschemikalie zu speichern.

13. Vorrichtung (1) nach einem der vorhergehenden Ansprüche, **dadurch gekennzeichnet, dass** jedes Material (MS1, MS2) ein synthetisches organisches Material, wie ein organisches Material, das zur Klasse der Tetrapyrrolmakrocyclen gehört, oder ein Material für OLED oder ein Material für LED oder ein biologisches System ist.

14. Vorrichtung (1) nach einem der vorhergehenden Ansprüche, **dadurch gekennzeichnet, dass** die Trägermittel (3) aus Teflon® oder Glas oder Quarz oder jedwedem anderen inerten Material gefertigt sind.

15. Vorrichtung (1) nach einem der vorhergehenden Ansprüche, **dadurch gekennzeichnet, dass** sie ein Filterelement (9) umfasst, um suspendierte feste Partikel und/oder Substanzen, die in der Echtmatrix gelöst sind, zu trennen; wobei das Filterelement an der Vorrichtung (1) angebracht ist, um so zwischen der Echtmatrix außerhalb der Detektierungsvorrichtung, mit der es in Kontakt ist, und den Trägermitteln angeordnet zu sein.

16. Vorrichtung (1) nach einem der vorhergehenden Ansprüche, **dadurch gekennzeichnet, dass** das Filterelement (9) aus Celluloseacetat oder Teflon® zusammengesetzt ist oder aus Polyethersulfon gefertigt ist oder aus jedwedem anderen Material mit selektiver Permeabilität gefertigt ist.

17. Vorrichtung (1) nach einem der vorhergehenden Ansprüche, **dadurch gekennzeichnet, dass** das Filterelement (9) eine Membran ist.

18. Vorrichtung (1) nach einem der vorhergehenden Ansprüche, **dadurch gekennzeichnet, dass** sie mit einer Öffnung oder einem Loch (23) und einem entfernbaren Verschlusselement (24) für die Öffnung versehen ist, um einen Durchgang von Luft auf der Außenseite der Vorrichtung zu ermöglichen, um im Inneren der Vorrichtung das Durchqueren des Filterelements (9) durch ein Fluid (A) zu erleichtern, welches die Verunreinigungs- und/oder Zusammensetzungschemikalie enthält.

19. Vorrichtung (1) nach einem der vorhergehenden Ansprüche, **dadurch gekennzeichnet, dass** sie ferner akustische und/oder visuelle Signalmittel zum Emittieren von akustischen und/oder visuellen Alarmen umfasst, wenn der Wert der Konzentration einer Verunreinigungschemikalie einen vorbestimmten Schwellenwert übersteigt.

## Revendications

1. Dispositif de détection (1) qui permet de détecter des agents chimiques contaminants et/ou compositionnels dans une matrice réelle, en particulier dans un liquide environnemental, un aliment ou un liquide biologique, lequel dispositif comprend :
- un boîtier (2);
- au moins un matériau (MS1, MS2) sensible à au moins un agent chimique contaminant et/ou compositionnel présent dans ladite matrice réelle,
- des moyens de support (3) destinés à supporter ledit au moins un matériau (MS1, MS2),
- une unité de détection (8) destinée à détecter ledit agent chimique contaminant et/ou compositionnel sur la base de changements dans les propriétés optiques et/ou électriques dudit matériau (MS1, MS2),
et comprenant, en outre, pour chaque matériau (MS1, MS2) sensible à au moins un agent chimique contaminant et/ou compositionnel :
- au moins une source ou un émetteur de lumière (4) capable d'émettre un ou plusieurs rayonnements lumineux sur ledit matériau sensible (MS1, MS2), ladite source lumineuse étant reliée à ladite unité de détection (8),
- un récepteur optique (5) destiné à recevoir le rayonnement lumineux réfléchi et/ou émis par ledit matériau (MS1, MS2), ledit récepteur optique étant relié à ladite unité de détection (8) et lui transmettant un ou plusieurs signaux contenant des informations sur les propriétés optiques dudit matériau (MS1, MS2), et
- une paire d'électrodes (6, 7; 6', 7'), chacune ayant une extrémité en contact avec ledit matériau (MS1, MS2), et l'autre extrémité électriquement reliée à ladite unité de détection (8), ladite unité de détection (8) étant capable d'appliquer, par l'intermédiaire desdites électrodes, une différence de potentiel sur ledit matériau sensible (MS1, MS2) de façon que celui-ci génère un ou plusieurs signaux de réponse contenant des informations sur ses propriétés électriques,
dispositif dans lequel, en outre, ladite source de lumière (4) est capable d'émettre lesdits rayonnements lumineux en séquence, et chaque rayonnement lumineux a une longueur d'onde respective prédéterminée ;
et dans lequel
ladite unité de détection (8) comprend une base de données (22) dans laquelle sont stockés :
- une pluralité de matériaux sensibles prédéterminés ;
- une pluralité de spectres optiques associés à chacun desdits matériaux sensibles prédéterminés, obtenus en l'absence et en présence d'une différence de potentiel prédéterminée appliquée à chacun d'eux, chaque spectre optique étant associé à l'interaction avec un ou plusieurs agents chimiques contaminants et/ou compositionnels prédéterminés,
- une pluralité de changements dans les propriétés électriques associées à chacun desdits matériaux sensibles prédéterminés, chaque changement de propriété électrique étant associé à l'interaction avec un ou plusieurs agents chimiques contaminants et/ou compositionnels prédéterminés,
ladite unité de détection (8) étant configurée pour recevoir des signaux contenant des informations relatives à des propriétés optiques dudit matériau sensible (MS1, MS2), et/ou des signaux contenant des informations relatives à des propriétés électriques du même matériau sensible pour obtenir des spectres optiques de chaque matériau sensible (MS1, MS2), en présence ou en l'absence d'une différence de potentiel appliquée par ladite unité de détection (8), à partir de rayonnements lumineux reçus dudit récepteur optique, et pour procéder à une première comparaison entre chaque spectre optique dudit agent chimique contaminant et/ou compositionnel à détecter et le spectre optique respectif stocké dans ladite base de données (22), et/ou pour procéder à une seconde comparaison entre des changements dans les propriétés électriques de chaque matériau sensible (MS1, MS2) et des changements dans les propriétés électriques de chaque matériau sensible (MS1, MS2) stocké dans ladite base de données (22) de façon à identifier, à partir de l'une desdites comparaisons ou de la combinaison desdites comparaisons, un ou plusieurs agents chimiques contaminants et/ou compositionnels dans ladite matrice réelle.

2. Dispositif (1) selon la revendication précédente, **caractérisé en ce qu'**il comprend, en outre, une autre paire d'électrodes (66, 77), espacées l'une de l'autre, dont chacune présente une première extrémité fixée audit boîtier (2), et une seconde extrémité tournée vers l'intérieur dudit dispositif et électriquement reliée à ladite unité de détection,
**en ce qu'**une pluralité de courbes de tension-courant prédéterminées sont stockées dans la base de données (22) de ladite unité de détection (8), chacune associée à au moins un agent chimique contaminant et/ou compositionnel prédéterminé, et
**en ce que** ladite unité de détection (8) est configurée pour appliquer une ou plusieurs différences de potentiel prédéterminées, constantes et/ou variables, sur ladite autre paire d'électrodes (66, 77) pour mesurer un signal de courant électrique respectif reçu, et pour procéder à une troisième comparaison entre la courbe tension-courant obtenue et des courbes tension-courant prédéterminées, de façon à identifier, par ladite troisième comparaison, des caractéristiques électrochimiques desdits agents chimiques contaminants et/ou compositionnels et de façon à éliminer, à partir de la combinaison avec ladite première et seconde comparaison, d'éventuelles ambiguïtés d'identification et de quantifier lesdits agents chimiques contaminants et/ou compositionnels.

3. Dispositif (1) selon l'une des revendications précédentes, **caractérisé en ce qu'**il comprend une pluralité de sources lumineuses (4) et **en ce que** ladite unité de détection (8) active, successivement, une source lumineuse (4) à la fois.

4. Dispositif (1) selon l'une des revendications précédentes, **caractérisé en ce que** le rayonnement émis par une source lumineuse (4) a une plus grande longueur d'onde pouvant atteindre un maximum de 50nm par rapport à la longueur d'onde du rayonnement lumineux émis par une source lumineuse (4) activée auparavant par l'unité de détection (8).

5. Dispositif (1) selon l'une des revendications précédentes, **caractérisé en ce qu'**au moins une source lumineuse (4) comprend des moyens support (41) et une pluralité de diodes émettrices de lumière ou LEDs (42) disposées sur lesdits moyens support (41), et **en ce que** ladite unité de détection (8) active successivement une source lumineuse à la fois.

6. Dispositif (1) selon la revendication précédente, **caractérisé en ce que** lesdits moyens support (41) comprennent un base rotative, et **en ce que** lesdites LEDs (42) sont disposées à proximité du bord de ladite base rotative.

7. Dispositif (1) selon l'une des revendications précédentes, **caractérisé en ce que**, lorsqu'il comprend une pluralité de matériaux (MS1, MS2) sensibles à au moins un agent chimique contaminant et/ou compositionnel, lesdits matériaux étant disposés sur un ou plusieurs moyens support (3), pour chaque matériau sensible (MS1, MS2) la paire respective constituée d'une source lumineuse (4) et d'un récepteur optique (5) est optiquement découplée des autres paires par des moyens de séparation (15) opaques et non-conducteurs, et la paire d'électrodes d'un matériau sensible respectif est électriquement découplée des autres paires d'électrodes par une isolation électrique.

8. Dispositif (1) selon l'une des revendications précédentes, **caractérisé en ce que** ladite unité de détection (8) comprend une mémoire (19) destinée à stocker des propriétés optiques et/ou électriques de matériaux sensibles (MS1, MS2) et/ou des propriétés électrochimiques de la matrice à examiner, en l'absence et/ou en présence d'au moins un agent chimique contaminant et/ou compositionnel.

9. Dispositif (1) selon l'une des revendications précédentes, **caractérisé en ce que** lesdits moyens support (3) sont fixés de manière amovible sur la surface intérieure du dispositif par des moyens d'engagement/désengagement.

10. Dispositif (1) selon l'une des revendications précédentes, **caractérisé en ce qu'**il comprend, pour chaque source lumineuse (4) et pour chaque récepteur optique (5), des moyens de réglage (4A, 5A) respectifs permettant de régler la position et l'orientation de ladite source lumineuse (4) et dudit récepteur optique (5) par rapport au matériau ; lesdits moyens de réglage (4A, 5A) étant commandés par ladite unité de détection (8).

11. Dispositif (1) selon l'une des revendications précédentes, **caractérisé en ce qu'**il comprend des moyens d'affichage (20) pour afficher les résultats du traitement de ladite unité de détection (8).

12. Dispositif (1) selon l'une des revendications précédentes, **caractérisé en ce que** ladite unité de détection (8) est reliée à un ordinateur (12) pour le contrôle à distance de ladite matrice réelle, et/ou le réglage d'un ou plusieurs paramètres de ladite unité de détection (8) et/ou le stockage d'informations relatives à des propriétés optiques et/ou électriques du matériau (MS1, MS2) en l'absence et en présence d'au moins un agent chimique contaminant.

13. Dispositif (1) selon l'une des revendications précédentes, **caractérisé en ce que** chaque matériau (MS1, MS2) est un matériau organique synthétique, tel qu'un matériau organique appartenant à la classe des macrocycles tétrapyrroliques ou un matériau pour OLEDs, ou un matériau pour LEDs, ou un système biologique.

14. Dispositif (1) selon l'une des revendications précédentes, **caractérisé en ce que** lesdits moyens support (3) sont constitués de Teflon® ou de verre ou de quartz ou tout autre matériau inerte.

15. Dispositif (1) selon l'une des revendications précédentes, **caractérisé en ce qu'**il comprend un élément filtre (9) pour séparer des particules solides en suspension et/ou des substances dissoutes dans ladite matrice réelle ; ledit élément filtre étant fixé sur ledit dispositif (1) de façon à être disposé entre ladite matrice réelle, à l'extérieur dudit dispositif de détection et avec laquelle il est en contact, et lesdits moyens support.

16. Dispositif (1) selon la revendication précédente, **caractérisé en ce que** ledit élément filtre (9) est constitué d'acétate de cellulose ou de Teflon®, ou est constitué de polyéthersulfone, ou de tout autre matériau à perméabilité sélective.

17. Dispositif (1) selon l'une des revendications précédentes, **caractérisé en ce que** ledit élément filtre (9) est une membrane.

18. Dispositif (1) selon l'une des revendications précédentes, **caractérisé en ce qu'**il est pourvu d'une ouverture ou d'un orifice (23) et d'un élément de fermeture (24) amovible pour ladite ouverture de façon à permettre un passage d'air sur l'extérieur du dispositif afin de faciliter, à l'intérieur dudit dispositif, le passage d'un fluide (A) contenant l'agent chimique contaminant et/ou compositionnel à travers l'élément filtre (9).

19. Dispositif (1) selon l'une des revendications précédentes, **caractérisé en ce qu'**il comprend, en outre, des moyens de signalisation acoustiques et/ou visuels destinés à émettre des alarmes acoustiques et/ou visuelles lorsque la valeur de la concentration d'un agent chimique contaminant dépasse un seuil prédéterminé.
